# EUROPEAN PATENT SPECIFICATION

(11) **EP 0 853 908 B1**
(45) Date of publication and mention of the grant of the patent: **05.07.2000**
(21) Application number: 98300184.3
(22) Date of filing: 13.01.1998
(51) Int. Cl.: A47J 31/06

(54) **Valve arrangement**
Ventilanordnung
Arrangement de clapet

(30) Priority: 16.01.1997 GB 9700839
(43) Date of publication of application: 22.07.1998
(73) Proprietor: Kenwood Marks Limited, Havant, Hampshire PO9 2NH (GB)
(72) Inventor: Harding, John Philip, Havant, Hampshire P09 3PP (GB)
(74) Representative: Marsh, Robin Geoffrey

(56) References cited:
- EP-A- 0 091 634
- EP-A- 0 111 969
- EP-A- 0 655 213
- DE-U- 7 243 540
- DE-U- 7 814 741

## Description

This invention relates to valve arrangements and it relates especially, though not exclusively, to such arrangements as may be used, for example, in domestic beverage-making appliances to ensure that the beverage is not released unless the intended receptacle is properly placed to receive it.

Such arrangements are commonly used in domestic coffee-making appliances in which a carafe, intended to hold the brewed coffee, is positioned beneath an outlet from the coffee-brewing station anal stands upon a heated base which is intended to keep the coffee warm until it is used. Conventionally, the outlet has associated with it a valve arrangement which is biased to the closed position, being urged open only in response to interaction between a component of the valve arrangement and the lid, or the rim, of the carafe.

Usually such valve arrangements include, as the closure member for the outlet, a conically-shaped resilient valve head which is urged into or withdrawn from the outlet, depending on the presence or absence of the carafe as outlined above. When the valve head is withdrawn from the outlet, however, it remains in the direct flow path of the coffee, which effectively spills over it, and in time this causes build-up of deposits on the valve head with associated reduction in the valving efficiency and in the general appearance and operation of the appliance as a whole, since the flow of coffee tends to be interfered with by the valve head and the liquid tends to dribble into areas where it causes staining.

In extreme cases, the coffee can run down on to the heated base on which the carafe stands, and cause unwanted spattering and steaming or even invade the area, beneath the base, where various electrical connections exist. Furthermore, the deposits can, indeed, build up to such an extent that the valve cannot seal properly, and this can allow coffee to drip from the brewing station even when there is no carafe in place to receive it, so that direct dripping of coffee on to the heated base can occur.

It is an object of this invention to provide a reliable valving arrangement which is constructed so as to reduce the risk of deleterious build-up of deposits and/or of the effects of such deposits, by arranging that the valve's closure member is withdrawn from the direct path of liquid flowing through the valved outlet when the valve is opened.

EP-A-11 1969 describes a valving arrangement for appliances such as coffee makers according to the preamble of claim 1, in which a valve head is carried at the end of a cranked arm that can be tilted, in response to vertical movement of a knob that is pushed upwards by contact with a coffee pot, to open or close a valve aperture through which coffee exits to the pot. The degree to which the valve opens, and thus the exit flow rate of the coffee is controllable by means of a manually adjustable slider which mechanically limits the travel of the arm bearing the valve head. This construction requires the cranked arm to be pivotally mounted in the close vicinity of the aperture through which the coffee exits, however, and the relatively small pivoting movements made might be interfered with, over time, by coffee products and debris. The present invention seeks to avoid such problems by imparting a robust and positively acting opening and closure motion to the valve head.

According to the invention there is provided a valve arrangement for controlling the flow of a fluid, comprising a reservoir for the fluid, an aperture (2) formed in an inclined portion of a base-wall (1) of the reservoir, a valve head (3) for selectively sealing the aperture (2) against flow of the fluid therethrough, a carriage member (4) bearing the valve head and capable of movement relative to the aperture, and a trigger member (8) capable of movement relative to the carriage member, said relative movement being constrained, by respective path-defining components (6,7) associated with the members (4,8), to operate between a first position, in which the head is urged by the action of resilient means (9) into the aperture, and a second position in which the valve head is withdrawn from the aperture against the action of said resilient means, thereby opening the aperture to fluid flow, the trigger member (8) being disposed, in said first position, to be engageable by part of a receptacle (19) positioned to receive fluid exiting the aperture in a flow direction, the trigger member (8) being urged, by contact with said part of the receptacle, to move relative to the carriage member (4), the arrangement being characterised by:
the base-wall (1) having a predominantly flat underside across which said carriage member (4) can slide;
said carriage member (4) comprising side walls formed with inclined slots (6) forming part of said path-defining means, and
said trigger member (8) bearing a pin (7) adapted to run in said slots (6) and forming the co-operative part of said path-defining means;
whereby movement of the trigger member (8) causes the carriage member (4) to slide along said underside of the base wall in a direction substantially transverse to said flow direction, causing the valve head (3) to open or close said aperture.

Another feature typical of coffee-makers is that they are provided with a housing which can be hinged open to permit the brewing cavity to be charged with fresh coffee and filters. It is quite important that the aforementioned valve assembly, which is commonly located at the bale of the brewing cavity's housing, remains closed until such time as the housing is properly closed.

If there were no such provision, there would be a risk that the coffee maker could be started up with the housing fully or partly open, and this could result in hot liquid showering out of the appliance. It is clearly desirable therefore that the valve assembly that interacts with the carafe should also be effective to detect the open condition of the housing, and some attempts have been made in the past to achieve this.

However, most such attempts have not been successful, usually because they have been too complex to render them either rugged and reliable on the one hand, or economic to manufacture on the other.

It is another object of this invention to provide a valving arrangement which is capable both of detecting the presence of a receptacle and the closure of the housing and which is efficient, reliable and economic to manufacture. Preferably also the valving arrangement has a closure member which does not lie in the direct flow path of fluid when the valve is open.

In order that the invention may be clearly understood and readily carried into effect, one embodiment thereof will now be described, by way of example only, with reference to the accompanying drawings of which:

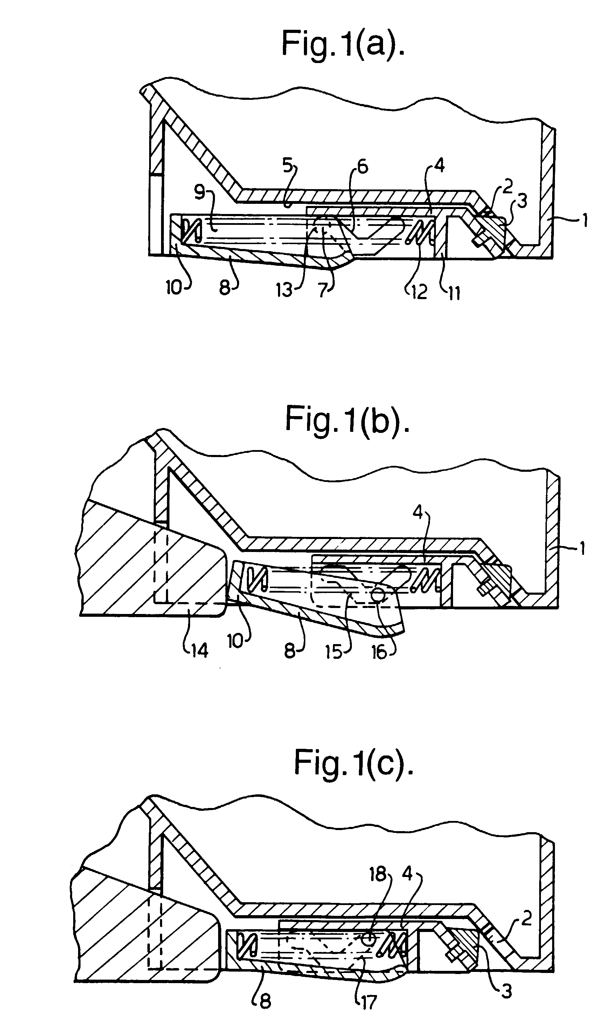

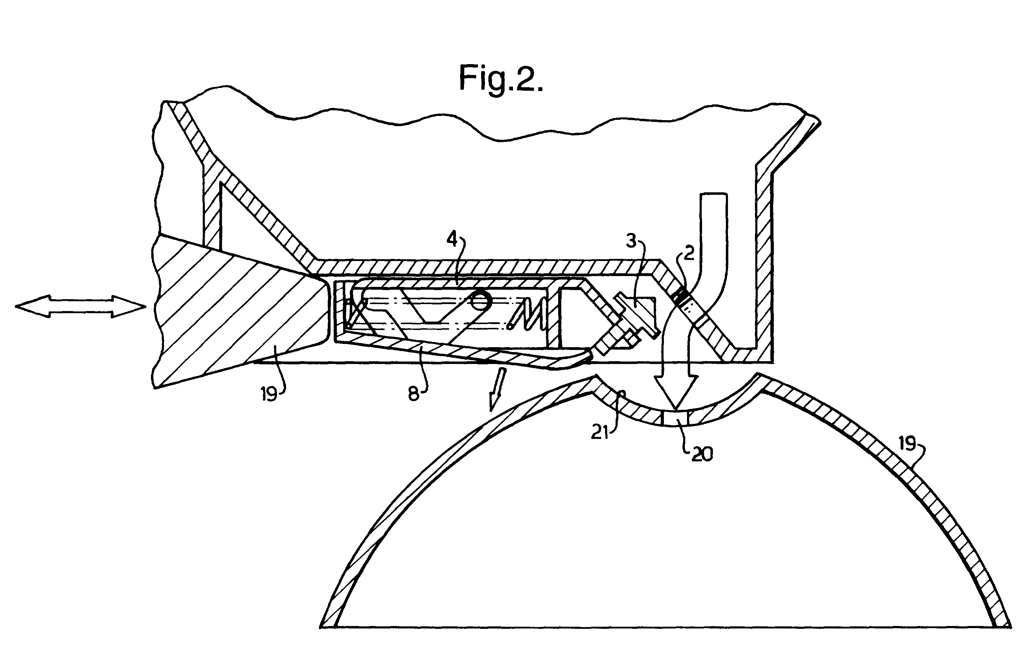

Figures 1(a), 1(b) and 1(c) show, in cross-section, various stages of operation of a valving arrangement, in accordance with one example of the invention, used in a coffee-making appliance, and Figure 2 shows, in cross-sectional view, the interaction of the valving arrangement of Figure 1 with a carafe intended to receive the coffee.

Referring now to the drawings, Figure 1(a) shows the valving arrangement in its closed position.

A part of the base of the brewing cavity is shown at 1; the valve arrangement generally shown at 1a being secured to it. The base 1 is formed with an outlet aperture 2 which is closed by a conical, resilient valve-head 3. The head 3 is supported by a carriage member 4 of box section, the upper surface of which can slide along the flat undersurface 5 of the base 1.

The side-walls of the carriage member 4 are formed with shaped slots such as 6 which form cam surfaces in which a pin 7, which is part of a trigger member 8, can slide. The pin 7 runs transversely across the trigger member 8 and protrudes through its side-walls such as 9 into the slots such as 6. The shaped slots 6 and the pin 7 constitute path-defining elements that constrain the relative motion of the trigger member 8 and the carriage member 4 to follow a predetermined path. The rear wall 10 of trigger member 8 and a front wall 11 of the carriage member 4 are urged apart by a spring 12.

In Figure 1(a), where there is no external agency acting on the valve assembly, the trigger member and the carriage member are urged apart to the maximum extent provide by the construction. In this situation, the dimensioning and configuration of the various components is such that the valve head 3 is urged firmly into the aperture 2, the pin 7 rests at the rear most end 13 of the slot 6 and the trigger member 8 and carriage member 4 are axially aligned in a stable configuration.

Referring now to Figure 1(b), this illustrates the situation that obtains when the housing which includes the base 1 is hinged to its properly closed position in relation to the appliance, but no carafe is in place. Here, a nose member 14, integrally formed with or secured to a fixed part of the appliance, engages with the rear wall 10 of trigger member 8 and causes this member to slide forwards relative to carriage member 4. This movement is accommodated by virtue of movement of the pin 7 down the ramp portion 15 of slot 6 and into a flat, intermediate portion 16 thereof, and causes a misalignment of the two members 8 and 4 which is critical to the operation of the valve. In this situation, the valve head 3 remains firmly urged into the aperture 2 but the trigger member adopts a primed condition in which it is ready to be actuated by engagement with part of a carafe when the latter is placed beneath the aperture.

In Figure 1(c) it is assumed that a carafe is in place. A selected feature or component of the carafe is arranged to urge the trigger member 8 upwards so as to again align it with carriage member 4, the movement being permitted by virtue of movement of the pin 7 up the ramp 17 forming part of the slot 6, to an extreme end position 18. In this position, the valve head 3 is withdrawn from the outlet aperture 2, to such an extent that it does not lie in the direct flow path of coffee out of the outlet 2. It will be noted in this respect that the movement of the valve head is not, as is usual, in and out along its own axis, but rather comprises a lateral shift relative to the outlet aperture.

Figure 2 shows how the lid 19 of a carafe (not shown) can be used to interact with the trigger member 8 to open the valve. The lid 19 is formed with a central aperture 20, through which the coffee is intended to enter the carafe. The aperture lies in a well 21 which allows for some build-up of brewed coffee so that spillage does not occur in the event that, temporarily, the outflow of coffee from the outlet 2 exceeds the inflow capacity of the aperture 1.

It will be observed that only when the trigger member 8 is displaced laterally and vertically with regards to carriage member 4, into its primed position as shown in Figure 1(b), can the necessary interaction between the lid 19 and the trigger member 8 occur to open the valve. Thus, if the nose member 14 has not displaced the trigger member 8 as shown, the valve cannot be opened by the carafe.

It will be appreciated that the characteristics of spring 12 and the shape and configuration of the slots such as 6 in the upright walls of carriage member 4 are designed to meet the criteria of any particular appliance. It will be appreciated also that the specific embodiment of the invention described with reference to the drawings is not intended to delimit the scope of the invention, either as to its construction or its application.

In particular, but without limitation, a valve assembly operative only between the primed position (Figure 1(b)) and the opened position (Figure 1(c)) may be provided within the scope of the invention for applications in which the part of the operation associated with the nose 14 is not required.

## Claims

1. A valve arrangement for controlling the flow of a fluid, comprising a reservoir for the fluid, an aperture (2) formed in an inclined portion of a base-wall (1) of the reservoir, a valve head (3) for selectively sealing the aperture (2) against flow of the fluid therethrough, a carriage member (4) bearing the valve head and capable of movement relative to the aperture, and a trigger member (8) capable of movement relative to the carriage member, said relative movement being constrained, by respective path-defining components (6,7) associated with the members (4,8), to operate between a first position, in which the head is urged by the action of resilient means (9) into the aperture, and a second position in which the valve head is withdrawn from the aperture against the action of said resilient means, thereby opening the aperture to fluid flow, the trigger member (8) being disposed, in said first position, to be engageable by part of a receptacle (19) positioned to receive fluid exiting the aperture in a flow direction, the trigger member (8) being urged. by contact with said part of the receptacle, to move relative to the carriage member (4), the arrangement being characterised by:
the base-wall (1) having a predominantly flat underside across which said carriage member (4) can slide;
said carriage member (4) comprising side walls formed with inclined slots (6) forming part of said path-defining means, and
said trigger member (8) bearing a pin (7) adapted to run in said slots (6) and forming the co-operative part of said path-defining means;
whereby movement of the trigger member (8) causes the carriage member (4) to slide along said underside of the base wall in a direction substantially transverse to said flow direction, causing the valve head (3) to open or close said aperture.

2. An arrangement according to Claim 1, characterised in that said carriage member (4) is provided with a leading edge wall substantially parallel to said inclined wall portion and in that said valve head (3) comprises a conically shaped member carried by said leading edge wall and disposed with its axis substantially normal thereto.

3. An arrangement according to claim 1 or claim 2, characterised in that said resilient means (9) comprises a spring adapted to urge said carriage member (4) and said trigger member (8) apart along the direction of movement of the carriage member (4).

4. A coffee-maker including a valve arrangement according to any preceding claim, characterised by the valve arrangement (1(a)) being mounted to the base (1) of a coffee brewing station and the trigger member (8) being adapted for engagement with part of the lid (19) of a carafe intended to receive brewed coffee through said aperture (2).

5. A coffee maker according to claim 4 characterised in that the brewing station is openable and the trigger member (8) is adapted for engagement with a nose part (14), carried by a fixed part of the coffee maker, to cause the valve arrangement to adopt said first position.

6. A coffee maker according to claim 5 characterised in that the path-defining components in said carriage member (4) comprise substantially V-shaped slots including a downwardly inclined ramp portion (15), a flat, intermediate portion (16),and an upwardly inclined ramp portion (17) formed in respective side-walls thereof and in that said trigger member (8) carries a pin (7) to run in said slots; the flat, intermediate portions (16) of said slots accommodating the pin (7) when the valve arrangement is in said first position.

7. A coffee maker according to Claim 6 characterised in that, prior to its engagement by the nose part (14) the trigger member (8) is substantially aligned with the carriage member (4) with the pin (7) at the top of the downwardly-inclined ramp (15); engagement with the nose part (14) causing the pin to move down the ramp and to latch at the first position with the trigger member misaligned with and protruding downwardly below, the carriage member (4), thereby priming the trigger member for actuation by engagement with said part of said receptacle (19).

8. A coffee maker according to Claim 7 characterised in that the trigger member (8) and the carriage member (4) are again in substantial alignment when the valve arrangement assumes the second position, in which said aperture (2) is opened.

## Patentansprüche

1. Ventilanordnung zum Steuern des Flusses eines Fluids, enthaltend: ein Reservoir für das Fluid, eine in einem schrägen Abschnitt der Grundwand (1) des Reservoirs ausgebildete Öffnung (2), einen Ventilkopf (3) zum selektiven Versiegeln der Öffnung (2) gegen Durchfluß des Fluids, ein Schlittenteil (4), das den Ventilkopf trägt und relativ zu der Öffnung beweglich ist, sowie ein Auslöseteil (8), das relativ zu dem Schlittenteil beweglich ist, wobei diese relative Bewegung durch entsprechende, den Teilen (4, 8) zugehörige, einen Weg definierende Komponenten (6, 7) eingeschränkt ist, um zwischen einer ersten Position, in welcher der Kopf durch die Aktion nachgiebiger Mittel (9) in die Öffnung gedrückt wird, und einer zweiten Position, in welcher der Ventilkopf gegen die Aktion der nachgiebigen Mittel von der Öffnung zurückgezogen ist, wodurch die Öffnung für Fluidfluß geöffnet ist, zu operieren, wobei das Auslöserteil so ausgelegt ist, daß es in der ersten Position von einem Teil eines Aufnahmebehälters (19) in Eingriff genommen werden kann, der so positioniert ist, daß er in einer Flußrichtung aus der Öffnung austretendes Fluid aufnimmt, wobei das Auslöseteil (8) durch Kontakt mit dem Teil des Aufnahmebehälters gedrängt wird, sich relativ zu dem Schlittenteil (4) zu bewegen, wobei die Anordnung dadurch gekennzeichnet ist, daß:
die Grundwand (1) eine überwiegend flache Unterseite aufweist, über welche ein Schlittenteil (4) gleiten kann; das Schlittenteil (4) Seitenwände umfaßt, die mit schrägen Schlitzen (6) ausgebildet sind, die Teil der einen Weg definierenden Mittel bilden, und
das Auslöseteil (8) einen Zapfen (7) trägt, der so ausgebildet ist, daß er in den Schlitzen (6) verläuft und das kooperierende Teil der den Weg definierenden Mittel bildet;
wobei eine Bewegung des Auslöseteils (8) das Schlittenteil (4) veranlasst, entlang der Unterseite der Grundwand in einer Richtung im wesentlichen quer zu der Flußrichtung zu gleiten, wodurch bewirkt wird, daß der Ventilkopf (3) die Öffnung öffnet oder schließt.

2. Anordnung nach Anspruch 1, dadurch gekennzeichnet, daß das Schlittenteil (4) mit einer im wesentlichen zu dem schrägen Wandabschnitt parallelen Vorderwand versehen ist, sowie dadurch, daß der Ventilkopf (3) ein konisches Teil umfaßt, das von der Vorderwand getragen wird und mit seiner Achse im wesentlichen senkrecht dazu angeordnet ist.

3. Anordnung nach Anspruch 1 oder Anspruch 2, dadurch gekennzeichnet, daß die nachgiebigen Mittel (9) eine Feder umfassen, die so ausgelegt ist, daß sie das Schlittenteil (4) und das Auslöseteil (8) entlang der Bewegungsrichtung des Schlittenteils (4) auseinanderdrängt.

4. Kaffeemaschine, beinhaltend eine Ventilanordnung nach einem der vorstehenden Ansprüche, dadurch gekennzeichnet, daß die Ventilanordnung (1(a)) an der Basis (1) einer Kaffee-Aufbrühstation angebracht ist und das Auslöseteil (8) so ausgelegt ist, daß es mit einem Teil des Deckels (19) einer Karaffe in Eingriff kommt, die dafür vorgesehen ist, aufgebrühten Kaffee duch die Öffnung (2) zu erhalten.

5. Kaffeemaschine nach Anspruch 4, dadurch gekennzeichnet, daß die Aufbrühstation geöffnet werden kann und das Auslöseteil (8) so ausgelegt ist, daß es mit einem Nasenteil (14) in Eingriff kommen kann, das von einem festen Teil der Kaffeemaschine getragen wird, um die Ventilanordnung zu veranlassen, die erste Position einzunehmen.

6. Kaffeemaschine nach Anspruch 5, dadurch gekennzeichnet, daß die den Weg definierenden Komponenten in dem Schlittenteil (4) im wesentlichen V-förmige Schlitze umfassen, die einen nach unten schräg verlaufenden Rampenabschnitt (15), einen flachen, Zwischenabschnitt (16) und einen nach oben hin schräg verlaufenden Rampenabschnitt (17) umfassen, die in entsprechenden Seitenwänden des Teils ausgebildet sind, sowie dadurch, daß das Auslöseteil (8) einen Zapfen (7) trägt, der in den Schlitzen verläuft; wobei die flachen Zwischenabschnitte (16) der Schlitze den Zapfen (7) aufnehmen, wenn sich die Ventilanordnung in der ersten Position befindet.

7. Kaffeemaschine nach Anspruch 6, dadurch gekennzeichnet, daß das Auslöseteil (8) vor seinem Ineingriffkommen mit dem Nasenteil (14) im wesentlichen mit dem Schlittenteil (4) mit dem Zapfen (7) an der Oberseite der nach unten schräg verlaufenden Rampe (15) ausgerichtet ist; daß der Eingriff mit dem Nasenteil (14) den Zapfen veranlaßt, sich die Rampe nach unten zu bewegen und in der ersten Position zu verriegeln, wobei das Auslöseteil nicht mehr mit dem Schlittenteil (4) ausgerichtet ist und nach unten über dieses hinausragt, wodurch das Auslöseteil zur Betätigung durch Ineingriffkommen mit dem Teil des Aufnahmebehälters (19) vorbereitet wird.

8. Kaffeemaschine nach Anspruch 7, dadurch gekennzeichnet, daß das Auslöseteil (8) und das Schlittenteil (4) wiederum im wesentlichen aneinander ausgerichtet sind, wenn die Ventilanordnung die zweite Position annimmt, in welcher die Öffnung (2) geöffnet ist.

## Revendications

1. Un agencement de clapet pour commander l'écoulement d'un fluide, comprenant un réservoir pour le fluide, une ouverture (2) formée dans une partie inclinée d'une paroi de fond (1) du réservoir, une tête de clapet (3) servant à obturer sélectivement l'ouverture (2) et à empêcher l'écoulement du fluide par cette dernière, un organe support (4) portant la tête de clapet et capable de se déplacer par rapport à l'ouverture et un organe de déclenchement (8) capable de se déplacer relativement à l'organe support, ledit mouvement relatif étant délimité par des éléments respectifs (6, 7) définissant un trajet associés aux organes (4, 8) de façon à fonctionner entre une première position, dans laquelle la tête est sollicitée par l'action de moyens élastiques (9) dans l'ouverture, et une seconde position, dans laquelle la tête de clapet est retirée de l'ouverture à l'encontre de l'action des moyens élastiques, ouvrant ainsi l'ouverture à l'écoulement de fluide, l'organe de déclenchement (8) étant disposé, dans ladite première position, de manière qu'une partie d'un récipient (19) positionné pour recevoir le fluide sortant de l'ouverture dans une direction d'écoulement puisse venir en appui contre lui, l'organe de déclenchement (8) étant sollicité par le contact avec ladite partie du récipient à se déplacer par rapport à l'organe support (4), ledit agencement étant caractérisé en ce que:
la paroi de fond (1) comporte un dessous qui est, de manière prédominante, plat, le long de laquelle l'organe support (4) peut coulisser;
ledit organe support (4) comporte des parois latérales munies de fentes inclinées (6) qui font partie desdits moyens définissant un trajet; et
ledit organe de déclenchement (8) porte une goupille (7) agencée de façon à se déplacer dans lesdites fentes (6) et formant la partie coopérante desdits moyens définissant un trajet;
de telle sorte que le déplacement de l'organe de déclenchement (8) provoque le coulissement de l'organe support (4) le long du dessous de la paroi de fond dans une direction sensiblement transversale à ladite direction d'écoulement provoquant l'ouverture ou la fermeture de l'ouverture par la tête de clapet (3).

2. Un agencement selon la revendication 1, caractérisé en ce que ledit organe support (4) est muni d'une paroi formant bord avant sensiblement parallèle à ladite partie de paroi inclinée et en ce que ladite tête de clapet (3) comporte un organe de forme conique porté par ladite paroi formant bord avant et disposé avec son axe sensiblement perpendiculaire à cette dernière.

3. Un agencement selon la revendication 1 ou la revendication 2 caractérisé en ce que lesdits moyens élastiques (9) comprennent un ressort agencé pour solliciter ledit organe support (4) et ledit organe de déclenchement (8) en éloignement l'un de l'autre suivant la direction de déplacement de l'organe support (4).

4. Une machine à café comportant un agencement de clapet selon l'une quelconque des revendications précédentes caractérisée en ce que l'agencement de clapet (1(a)) est monté sur le fond (1) de moyens d'infusion de café, l'organe de déclenchement (8) étant agencé pour venir en contact avec le couvercle (19) d'une carafe destinée à recevoir le café infusé s'écoulant par ladite ouverture (2).

5. Une machine à café selon la revendication 4, caractérisée en ce que les moyens d'infusion peuvent être ouverts et l'organe de déclenchement (8) est agencé pour venir en contact avec une partie formant bec (14) portée par une partie fixe de la machine à café pour provoquer le positionnement de l'agencement de clapet dans ladite première position.

6. Une machine à café selon la revendication 5, caractérisée en ce que les éléments définissant un trajet dudit organe support (4) comprennent des fentes sensiblement en forme de V qui comportent une partie de rampe inclinée vers le bas (15), une partie intermédiaire plate (16) et une partie de rampe inclinée vers le haut (17) formées dans les parois latérales respectives dudit organe et en que l'organe de déclenchement (8) porte une goupille (7) agencée pour se déplacer dans lesdites fentes, les parties intermédiaires plates (16) desdites fentes recevant la goupille (7) lorsque l'agencement de clapet est dans ladite première position.

7. Une machine à café selon la revendication 6, caractérisée en ce qu'avant que la partie formant bec (14) vienne en contact avec lui, l'organe de déclenchement (8) est sensiblement aligné avec l'organe support (4), la goupille (7) étant située au sommet de la rampe inclinée vers le bas (15), la prise de contact avec la partie formant bec (14) provoquant le déplacement de la goupille vers le bas le long de la rampe et son verrouillage dans la première position avec l'organe de déclenchement hors d'alignement avec l'organe support (4) et faisant saillie vers le bas par rapport à lui, armant ainsi l'organe de déclenchement de façon qu'il puisse être actionné par contact avec ladite partie dudit récipient (19).

8. Une machine à café selon la revendication 7, caractérisée en ce que l'organe de déclenchement (8) et l'organe support (4) sont à nouveau sensiblement en alignement lorsque l'agencement de clapet occupe sa seconde position dans laquelle ladite ouverture (2) est ouverte.
